# EUROPEAN PATENT SPECIFICATION

(11) **EP 4 648 319 B1**
(45) Date of publication and mention of the grant of the patent: **25.11.2026**
(21) Application number: 24809544.0
(22) Date of filing: 18.10.2024
(51) Int. Cl.: H04L 1/00, H04L 27/14, B61L 3/12, B61L 15/00

(54) **PACKET ADJUSTMENT METHOD AND APPARATUS, DEVICE, AND STORAGE MEDIUM**
PAKETANPASSUNGSVERFAHREN UND -VORRICHTUNG, VORRICHTUNG UND SPEICHERMEDIUM
PROCÉDÉ ET APPAREIL D'AJUSTEMENT DE PAQUET, DISPOSITIF ET SUPPORT DE STOCKAGE

(30) Priority: 15.03.2024 CN 202410299831
(43) Date of publication of application: 12.11.2025
(73) Proprietor: CRSC RESEARCH & DESIGN INSTITUTE GROUP CO., LTD., Fengtai District Beijing 100070 (CN)
(72) Inventor: JIN, Xu, Beijing 100070 (CN); LIN, Ziming, Beijing 100070 (CN); LIANG, Na, Beijing 100070 (CN); WU, Fangda, Beijing 100070 (CN); MA, Pan, Beijing 100070 (CN)
(74) Representative: Haseltine Lake Kempner LLP
(86) International application number: PCT/CN2024/125680
(87) International publication number: WO 2025/189753

(56) References cited:
- CN-A- 108 270 706
- CN-A- 114 070 351
- CN-A- 114 143 267
- CN-A- 114 567 604
- CN-A- 118 300 745
- RENPENG LIU: "Analysis and Application of CTCS Balise Message Modification Scheme", RAILWAY SIGNALLING & COMMUNICATION ENGINEERING (RSCE), BEIJING ALL ROAD COMMUNICATION SIGNAL RESEARCH AND DESIGN INSTITUTE, CN, vol. 14, no. 6, 25 December 2017 (2017-12-25), CN , pages 18 - 22, XP093360947, ISSN: 1673-4440, DOI: 10.3969/j.issn.1673-4440.2017.06.006

## Description

### TECHNICAL FIELD

The present invention relates to the technical field of data processing, and in particular, to a message adjustment method, apparatus, device and storage medium.

### BACKGROUND

When the train passes the transponder, the BTM (balise transmission module) antenna supplies energy to the transponder, then the transponder modulates the information into FSK signal and sends it to the train, the BTM demodulates and then decodes the received FSK signal to obtain the information, and transmits it to the on-board main control unit. However, due to various interferences in the propagation process of FSK signal, its width may be jittered, resulting in errors such as flipping, adding or losing messages. According to the calculation and empirical judgment of the waveform duration of the front and back signals, some adjustment measures for messages when clock errors occur could be summarized. These message adjustment measures can greatly improve the quality of messages and reduce message errors.

However, these message adjustment measures are not perfect, if the message is adjusted frequently in the fixed length interval, the security of the message will be affected.

CN114143267A describes a traffic adjustment method and device, electronic equipment and computer readable storage medium.

CN108270706A describes a BTM demodulation signal self-synchronization receiving method.

### SUMMARY

The invention provides a message adjustment method, apparatus, device and storage medium to improve message security during BTM demodulation.

According to an aspect of the present invention, a method for message adjustment is provided, the method comprising:
obtaining a message adjustment limit times and a message adjusted times of a target message adjustment interval;
determining a target counter set according to the message adjustment limit times; target counters of the target counter set are arranged in an orderly manner;
performing message adjustment on the target message according to the message adjustment limit times, the message adjusted times, and a count value of the target counter in the target counter set when a message adjustment request is detected within the target message adjustment interval.

According to another aspect of the present invention, a message adjustment apparatus is provided, the apparatus comprising:
a times obtaining module for obtaining a message adjustment limit times and a message adjusted times of a target message adjustment interval;
a target counter set determining module for determining a target counter set according to the message adjustment limit times; target counters of the target counter set are arranged in an orderly manner;
a message adjusting module for performing message adjustment on the target message according to the message adjustment limit times, the message adjusted times, and a count value of the target counter in the target counter set when a message adjustment request is detected within the target message adjustment interval.

According to another aspect of the present invention, an electronic device is provided, the electronic device comprising:
at least one processor; and
a memory communicatively connected to the at least one processor; wherein,
the memory stores a computer program executable by the at least one processor, the computer program being executed by the at least one processor to enable the at least one processor to perform the message adjustment method of any embodiment of the present invention.

According to another aspect of the present invention, a computer-readable storage medium is provided, the computer-readable storage medium stores computer instructions for implementing the message adjustment method according to any embodiment of the present invention when executed by a processor.

According to the technical solution of the embodiment of the present invention, by obtaining the message adjustment limit times and the message adjusted times of a target message adjustment interval, a target counter set can be determined according to the message adjustment limit times; target counters of the target counter set are arranged in an orderly manner; message adjustment can be performed on the target message according to the message adjustment limit times, the message adjusted times, and a count value of the target counter in the target counter set when a message adjustment request is detected within the target message adjustment interval. In the technical proposal, when the message adjustment request is detected within the target message adjustment interval, the target message is adjusted according to the change of the count value of the target counter in the target counter set, instead of directly adjusting the target message without judgment when the message adjustment request is detected in the target message adjustment interval, thereby limiting the adjustment times of the message in the BTM demodulation process to a certain extent, improving the message quality and reducing the message error, and enhancing the security of the message in the BTM demodulation process.

It should be understood that what is described in this section is not intended to identify key or important features of embodiments of the invention, nor is it intended to limit the scope of the invention. Other features of the present invention will become readily understood by the following description.

### BRIEF DESCRIPTION OF DRAWINGS

In order to explain the technical solutions in the embodiments of the present invention more clearly, the drawings needed to be used in the description of the embodiments will be briefly introduced below, and it is obvious that the drawings in the following description are only some embodiments of the present invention, and for those of ordinary skill in the art, other accompanying drawings can be obtained from these accompanying drawings without making creative efforts.
FIG. 1 is a flow chart of a method for message adjustment provided according to Embodiment 1 of the present invention;
FIG. 2 is a flow chart of a method for message adjustment provided according to Embodiment 2 of the present invention;
FIG. 3 is a flow chart of a method for message adjustment provided according to Embodiment 3 of the present invention;
FIG. 4 is a schematic structural diagram of a device for message adjustment provided according to Embodiment 4 of the present invention;
FIG. 5 is a schematic structural diagram of an electronic device that implements the method for message adjustment according to an embodiment of the present invention.

### DETAILED DESCRIPTION

In order to enable those skilled in the art to better understand the solutions of the present invention, the technical solutions in the embodiments of the present invention will be clearly and completely described below with reference to the drawings in the embodiments of the present invention, and it is obvious that the described embodiments are only some embodiments of the present invention, but not all embodiments. Based on the embodiments in the present invention, all other embodiments obtained by those skilled in the art without creative work should belong to the scope of protection of the present invention.

It should be noted that the terms "target", "candidate", "first", "second" and the like in the specification and claims and the above-described drawings of the present invention are used to distinguish similar objects, and are not necessarily used to describe a specific order or sequence. It should be understood that the data used hereby may be interchangeable where appropriate so that the embodiments of the invention described herein can be implemented in an order other than those illustrated or described herein. Furthermore, the terms "comprising" and "having" and any variations thereof are intended to cover a non-exclusive inclusion, for example, a process, method, system, product, or device comprising a series of steps or units is not necessarily limited to those steps or units clearly listed, but may include other steps or units not clearly listed or inherent to such processes, methods, products, or devices.

In addition, in the technical solution of the present invention, the handling of the collection, storage, usage, processing, transmission, provision and disclosure of the target interval length of the target message adjustment interval, the message adjustment limit times and a message adjusted times are all in accordance with the provisions of relevant laws and regulations, and do not violate public order and good customs.

### Embodiment 1

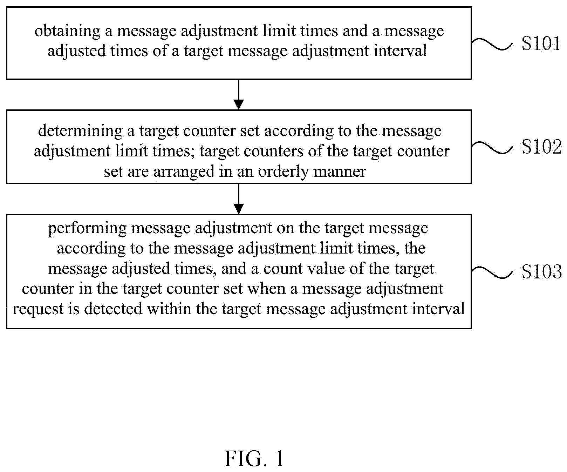

FIG. 1 is a flow chart of a method for message adjustment provided by Embodiment 1 of the present invention, this embodiment can be applied to the situation of adjusting messages during the BTM demodulation process, this method can be executed by a message adjustment apparatus, this apparatus can be implemented in the form of hardware and/or software, and can be configured in electronic device. As shown in FIG. 1, the method includes:
S101. Obtain the limited number of message adjustment times and the number of message adjusted times of the target message adjustment interval.

Wherein, the target message adjustment interval refers to the interval in which the target message is adjusted. Wherein, the target message refers to the message to be adjusted. The message adjustment limit times refer to the upper limit of times of message adjustment allowed within the target message adjustment interval; optionally, the message adjustment limit times can be preset based on experience values of those skilled in the art or actual business requirements, and are not specifically limited in this embodiment of the present invention. The message adjusted times refer to the total number of times the target message has been adjusted within the target message adjustment interval. It should be noted that, in the initial case, the message adjusted times in the target message adjustment interval is 0.

Specifically, the message adjustment limit times and the message adjusted times of the target message adjustment interval can be obtained from a preset storage device. Wherein, the preset storage device stores the message adjustment limit times and a message adjusted times of the target message adjustment interval during the BTM demodulation process.

S102. determining a target counter set according to the message adjustment limit times; target counters of the target counter set are arranged in an orderly manner.

Wherein, the target counter set refers to a set aggregated by at least one target counter; optionally, the target counter set can be in the form of an array. Wherein, the target counter refers to the counter used for message adjustment during the BTM demodulation process.

Specifically, the message adjustment limit times can be used as the set length of the target counter set; based on the set length, a target counter set is determined. Among them, the set length refers to the total number of target counters in the target counter set. It should be noted that the set length of the target counter set is equal to the message adjustment limit times.

For example, if the message adjustment limit times is 3, the set length of the target counter set is determined to be 3; according to the set length, 3 target counters are generated, and the set formed by aggregating these 3 target counters is used as the target counter set. Among them, the 3 target counters in the target counter set are arranged in order in the target counter set according to the order in which they are generated.

S103. performing message adjustment on the target message according to the message adjustment limit times, the message adjusted times, and a count value of the target counter in the target counter set when a message adjustment request is detected within the target message adjustment interval.

Among them, the message adjustment request refers to a request to adjust messages within the target message adjustment interval.

Specifically, when a message adjustment request is detected within the target message adjustment interval, based on the message adjustment model, according to the message adjustment limit times, the message adjusted times, and a count value of the target counter in the target counter set, perform message adjustment on the target message. Among them, the message adjustment model can be preset according to actual business requirements, and the embodiment of the present invention does not specifically limit it.

According to the technical solution of the embodiment of the present invention, by obtaining the message adjustment limit times and the message adjusted times of a target message adjustment interval, a target counter set can be determined according to the message adjustment limit times; target counters of the target counter set are arranged in an orderly manner; message adjustment can be performed on the target message according to the message adjustment limit times, the message adjusted times, and a count value of the target counter in the target counter set when a message adjustment request is detected within the target message adjustment interval. In the technical proposal, when the message adjustment request is detected within the target message adjustment interval, the target message is adjusted according to the change of the count value of the target counter in the target counter set, instead of directly adjusting the target message without judgment when the message adjustment request is detected in the target message adjustment interval, thereby limiting the adjustment times of the message in the BTM demodulation process to a certain extent, improving the message quality and reducing the message error, and enhancing the security of the message in the BTM demodulation process.

### Embodiment 2

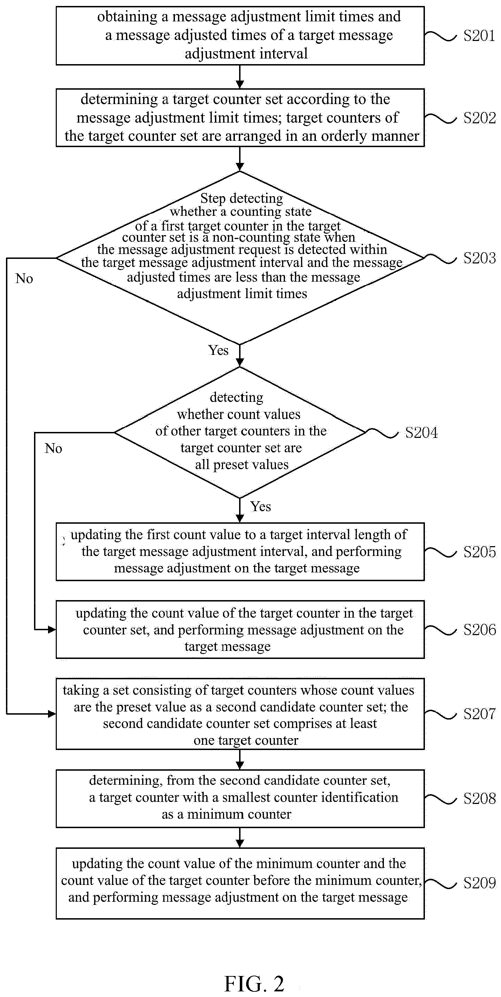

FIG. 2 is a flow chart of a method for message adjustment provided by Embodiment 2 of the present invention. Based on the above embodiment, this embodiment further optimizes "performing message adjustment on the target message according to the message adjustment limit times, the message adjusted times, and a count value of the target counter in the target counter set", and provides an optional implementation. It should be noted that, in the embodiments of the present invention, the relevant expressions of other embodiments may be referred to in parts not described in detail. As shown in FIG. 2, the method includes:
S201. obtaining a message adjustment limit times and a message adjusted times of a target message adjustment interval.
S202. determining a target counter set according to the message adjustment limit times; target counters of the target counter set are arranged in an orderly manner.
S203. detecting whether a counting state of a first target counter in the target counter set is a non-counting state when the message adjustment request is detected within the target message adjustment interval and the message adjusted times are less than the message adjustment limit times.

The first target counter refers to a target counter having the smallest counter identification in the target counter set. The counter identification is used to uniquely identify the target counter; optionally, the counter identification may be in the form of a number, an alphabet, or a number plus an alphabet. The first count value refers to a count value of the first target counter. The counting state of the first target counter refers to a change state of the first count value of the first target counter. The non-counting state refers to a state in which the first count value is about to be reduced from 1 to 0 at the current time. It should be noted that, for each target counter in the target counter set, if the count value of the target counter is not 0, the count value of the target counter is decreased by 1.

Specifically, when a message adjustment request is detected in the target message adjustment interval, and the message adjusted times are less than the message adjustment limit times, if the counting state of the first target counter in the target counter set is the non-counting state, S204 is executed; otherwise, S207 is executed.

S204. detecting whether count values of other target counters in the target counter set are all preset values. Wherein, other target counters refer to target counters other than the first target counter in the target counter set.

The preset value can be preset based on the experience values of those skilled in the art or actual business requirements. For example, the preset value is set to 0 based on the experience values of those skilled in the art, which is not specifically limited in this embodiment of the present invention.

Specifically, when a message adjustment request is detected within the target message adjustment interval and the message adjusted times are less than the message adjustment limit times, if the counting state of the first target counter is the non-counting state, detecting whether the count values of other target counters in the target counter set are all preset values; If yes, S205 is executed; If not, S206 is executed.

S205. updating the first count value to a target interval length of the target message adjustment interval, and performing message adjustment on the target message.

Among them, the target interval length refers to the interval length of the target message adjustment interval; optionally, the target interval length can be determined based on the encoding characteristics of the message, for example, if the encoding of the message is DBPL (Differential BiPhase Level) encoding, the target interval length can be 1023 bits.

Specifically, when a message adjustment request is detected within the target message adjustment interval and the message adjusted times are less than the message adjustment limit times, if the counting state of the first target counter is the non-counting state, and the count values of other target counters in the target counter set are all preset values, the first count value is updated to the target interval length of the target message adjustment interval, and the target message is adjusted by the preset message adjustment mode. Wherein, the preset message adjustment mode can be preset according to the experience value of those skilled in the art, and the embodiment of the present invention does not specifically limit the adjustment mode.

For example, if the message adjusted times is **1,** the message adjustment limit times is 3, the preset value is 0, the target interval length of the target message adjustment interval is 10 bits, and the target counter set includes the first target counter, the second target counter and the third target counter; the counter identifications of the first target counter, the second target counter and the third target counter gradually become larger, the counter identification of the first target counter is the smallest, and the counter identification of the third target counter is the largest; the first count value of the first target counter is 1, the second count value of the second target counter is 0, and the third count value of the third target counter is 0. It can be seen that when a message adjustment request is detected within the target message adjustment interval and the message adjusted times are less than the message adjustment limit times, the first count value will be reduced from 1 to 0, that is, the count state of the first target counter is the non-counting state, the count values of other target counters in the target counter set are all preset values, and the first count value is updated to the target interval length of the target message adjustment interval, that is, the first count value is 10; the target message is adjusted by a preset message adjustment mode.

S206. updating the count value of the target counter in the target counter set, and performing message adjustment on the target message.

Specifically, when a message adjustment request is detected in the target message adjustment interval, and the message adjusted times are less than the message adjustment limit times, if the counting state of the first target counter is the non-counting state, and the count values of other target counters in the target counter set are not all the preset values, a set of target counters whose count values are not the preset values is set as the first candidate counter set; the first set of candidate counters comprises at least one target counter; a target counter whose counter identification is largest in the first set of candidate counters is determined as a first maximum counter; the count value of the first maximum counter and the count value of the target counter before the first maximum counter is updated, and the target message is performed message adjustment by adopting a preset message adjustment mode. The preset message adjustment mode may be preset according to the experience value of a person skilled in the art, and the embodiment of the present invention does not specifically limit the preset message adjustment mode.

Optionally, the count value of the first maximum counter and the count value of the target counter before the first maximum counter may be updated by subtracting the count value of the next target counter of the target counter by 1 for any target counter before the first maximum counter, as the target count value; and updating the count value of the target counter to the target count value; the count value of the first maximum counter is updated to the target interval length.

For example, if the message adjusted times is 2, the message adjustment limit times is 3, the preset value is 0, the length of the target interval is 10, and the target counter set includes a first target counter, a second target counter, and a third target counter. The counter identifications of the first target counter, the second target counter, and the third target counter gradually become larger, the counter identification of the first target counter is the smallest, and the counter identification of the third target counter is the largest; the first count value of the first target counter is 1, the second count value of the second target counter is 4, and the third count value of the third target counter is 0. It can be seen that when a message adjustment request is detected in the target message adjustment interval, and the message adjusted times are less than the message adjustment limit times, the first count value will be decreased from 1 to 0, that is, the counting state of the first target counter is a non-counting state, and the count values of other target counters in the target counter set are not all preset values, and the set of target counters whose count values are not preset values is taken as the first candidate counter set, that is, the first candidate counter set includes the first target counter and the second target counter, a target counter having the largest counter identification from the first set of candidate counters is determined as a first maximum counter, i.e., the first maximum counter is a second target counter; for the first target counter preceding the second target counter, a value obtained by decrementing the second count value of the second target counter by 1 is set as a target count value, that is, the target count value is 3; and the first count value of the first target counter is updated to the target count value, that is, the first count value is 3; the second count value of the second target counter is updated to the target interval length, that is, the second count value is 10, and at the same time, the message adjustment of the target message is performed by adopting a preset message adjustment mode.

It should be noted that, in a case where a message adjustment request is detected in the target message adjustment interval, and the message adjusted times are less than the message adjustment limit times, the message adjusted times are increased by 1 if the counting state of the first target counter is not the non-counting state; otherwise, the message adjusted times has been adjusted remains unchanged.

For example, if the message adjusted times is 0, the message adjustment limit times is 3, and the first count value is 0, when a message adjustment request is detected in the target message adjustment interval, and the message adjusted times are less than the message adjustment limit times, the first count value is the initial value, and the counting state of the first target counter is not the non-counting state, and the message adjusted times is increased by 1, that is, the message adjusted times is 1.

For example, if the message adjusted times is **1,** the message adjustment limit times is 3, and the first count value is 8, when a message adjustment request is detected in the target message adjustment interval, and the message adjusted times are less than the message adjustment limit times, the first count value will be reduced from 8 to 7, and the counting state of the first target counter is not the non-counting state, and the message adjusted times is increased by 1, that is, the message adjusted times is 2 times.

For example, if the message adjusted times is 2, the message adjustment limit times is 3, and the first count value is **1,** when a message adjustment request is detected in the target message adjustment interval, and the message adjusted times are less than the message adjustment limit times, the first count value will be reduced from 1 to 0, and the message adjusted times remains unchanged, that is, the message adjusted times is still 2 times.

S207. taking a set consisting of target counters whose count values are the preset value as a second candidate counter set; the second candidate counter set comprises at least one target counter.

Specifically, when a message adjustment request is detected within the target message adjustment interval and the message adjusted times are less than the message adjustment limit times, if the counting state of the first target counter is not a non-counting state, the set consisting of target counters with preset values is used as the second candidate counter set.

For example, if the message adjusted times is 2, the message adjustment limit times is 3, the preset value is 0, the length of the target interval is 10, and the target counter set includes a first target counter, a second target counter, and a third target counter. The counter identifications of the first target counter, the second target counter, and the third target counter gradually become larger, the counter identification of the first target counter is the smallest, and the counter identification of the third target counter is the largest; the first count value of the first target counter is 5, the second count value of the second target counter is 8, and the third count value of the third target counter is 0. It can be seen that when a message adjustment request is detected in the target message adjustment interval, and the message adjusted times are less than the message adjustment limit times, the first count value will be decreased from 5 to 4, that is, the count state of the first target counter is not the non-counting state, and a set consisting of target counters whose count values are preset values is used as the second candidate counter set, that is, the second candidate counter set includes the third target counter.

S208. determining, from the second candidate counter set, a target counter with a smallest counter identification as a minimum counter.

Based on the above example, it can be seen that the minimum counter is the third target counter.

S209. updating the count value of the minimum counter and the count value of the target counter before the minimum counter, and performing message adjustment on the target message.

Specifically, for any target counter in the target counters before the minimum counter, the count value of the target counter is decremented by 1; at the same time, the count value of the minimum counter is updated to the target interval length, and the preset message adjustment method is used to adjust the target message. Among them, the preset message adjustment method can be preset based on the experience of those skilled in the art, and is not specifically limited in the embodiment of the present invention.

Based on the above example, for the first target counter and the second target counter before the third target counter, the first count value of the first target counter is decremented by 1, that is, the first count value is 4; the second count value of the second target counter is decremented by 1, that is, the second count value is 7; at the same time, the third count value of the third target counter is updated to the target interval length, that is, the third count value is 10, and the preset message adjustment method is used to perform message adjustment on the target message.

In the technical solution of the embodiment of the invention, when the message adjustment request is detected in the target message adjustment interval, the target message is adjusted according to the change of the count value of the target counter in the target counter set, instead of directly adjusting the target message without judgment under the condition that the message adjustment request is detected in the target message adjustment interval, thereby limiting the adjustment times of the message in the BTM demodulation process to a certain extent, improving the message quality and reducing the message error, and enhancing the security of the message in the BTM demodulation process.

### Embodiment 3

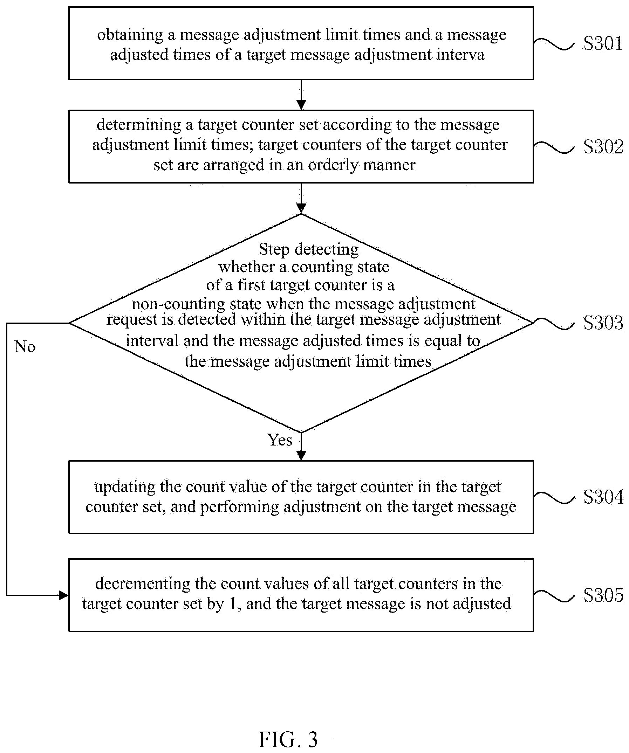

FIG. 3 is a flow chart of a method for message adjustment provided by Embodiment 3 of the present invention, on the basis of the above-described embodiments, the present embodiment provides a technical solution for not adjusting a target message when a message adjustment request is detected in a target message adjustment interval. It should be noted that, in the embodiments of the present invention, the relevant expressions of other embodiments may be referred to in parts not described in detail. As shown in FIG. 3, the method includes:
S301. obtaining a message adjustment limit times and a message adjusted times of a target message adjustment interval.
S302. determining a target counter set according to the message adjustment limit times; target counters of the target counter set are arranged in an orderly manner.
S303. detecting whether a counting state of a first target counter is a non-counting state when the message adjustment request is detected within the target message adjustment interval and the message adjusted times is equal to the message adjustment limit times.

Among them, the non-counting state refers to the state in which the first count value will be decremented from 1 to 0 at the current time. It should be noted that for each target counter in the target counter set, if the count value of the target counter is not 0, the count value of the target counter is decremented by 1.

Specifically, when a message adjustment request is detected within the target message adjustment interval and the message adjusted times is equal to the message adjustment limit times, detecting whether the counting state of the first target counter is a non-counting state; if yes, S304 is executed; otherwise, S305is executed.

S304. updating the count value of the target counter in the target counter set, and performing adjustment on the target message.

Specifically, when a message adjustment request is detected within the target message adjustment interval and the message adjusted times are equal to the message adjustment limit times, if the counting state of the first target counter is the non-counting state, the count value of the target counter in the target counter set is updated, and the preset message adjustment method is used to perform message adjustment on the target message. Among them, the preset message adjustment method can be preset based on the experience of those skilled in the art, and is not specifically limited to the embodiment of the present invention.

Optionally, updating the count value of the target counter in the target counter set may include: using a set consisting of target counters whose count values are not preset values as the third candidate counter set; the third candidate counter set includes at least one target counter; determining, from the third candidate counter set, a target counter for which the counter identities are the largest as a second maximum counter; for any target counter before the second maximum counter, taking the count value of the next target counter of the target counter decremented by 1 as the target count value; and updating the count value of the target counter to a target count value; updating the count value of the second maximum counter to the target interval length.

For example, if the message adjusted times is 3, the message adjustment limit times is 3, the preset value is 0, and the target counter set includes the first target counter, the second target counter and the third target counter; the counter identifications of the first target counter, the second target counter and the third target counter gradually become larger, the counter identification of the first target counter is the smallest, and the counter identification of the third target counter is the largest; the first count value of the first target counter is 1, the second count value of the second target counter is 7, and the third count value of the third target counter is 8. It can be seen that when a message adjustment request is detected within the target message adjustment interval and the message adjusted times is equal to the message adjustment limit times, the first count value will be decremented from 1 to 0, that is, the count state of the first target counter is the non-counting state; a set consisting of target counters whose count values are not the preset value is used as the third candidate counter set, that is, the third candidate counter set includes the first target counter, the second target counter and the third target counter; the target counter with the largest counter identification from the third candidate counter set is determined as the second maximum counter, that is, the second maximum counter is the third target counter; for the first target counter before the third maximum counter, the value that the second count value of the second target counter decremented by 1 is used as the target count value, that is, the target count value is 6, and the first count value of the first target counter is updated to 6; for the second target counter before the third maximum counter, the value that the third count value of the third target counter decremented by 1 is used as the target count value, that is, the target count value is 7, and the second count value of the second target counter is updated to 7; at the same time, the third count value of the third target counter is updated to the target interval length, that is, the third count value is 10.

S305. decrementing the count values of all target counters in the target counter set by 1, and the target message is not adjusted.

Specifically, when a message adjustment request is detected within the target message adjustment interval and the message adjusted times is equal to the message adjustment limit times, if the counting state of the first target counter is not the non-counting state, the count values of all target counters in the target counter set are decremented by 1, and the target message is not adjusted.

For example, if the message adjusted times is 3, the message adjustment limit times is 3, and the target counter set includes the first target counter, the second target counter and the third target counter; the counter identifications of the first target counter, the second target counter and the third target counter gradually become larger, the counter identification of the first target counter is the smallest, and the counter identification of the third target counter is the largest; the first count value of the first target counter is 2, the second count value of the second target counter is 8, and the third count value of the third target counter is 9. It can be seen that when a message adjustment request is detected within the target message adjustment interval and the message adjusted times is equal to the message adjustment limit times, the first count value will be decremented from 2 to 1, that is, the count state of the first target counter is the non-counting state, and the first count value, the second count value and the third count value are all decremented by 1, that is, the first count value is 1, the second count value is 7, and the third count value is 8, and no adjustment is made to the target message.

In the technical solution of the embodiment of the invention, when the message adjustment request is detected in the target message adjustment interval, the target message is adjusted according to the change of the count value of the target counter in the target counter set, instead of directly adjusting the target message without judgment under the condition that the message adjustment request is detected in the target message adjustment interval, thereby limiting the adjustment times of the message in the BTM demodulation process to a certain extent, improving the message quality and reducing the message error, and enhancing the security of the message in the BTM demodulation process.

It should be noted that when no message adjustment request is detected within the target message adjustment interval, if the counting state of the first target counter is the non-counting state, the message adjusted times are decremented by 1; otherwise, the message adjusted times remain unchanged, and the target message is not adjusted.

It should be noted that when no message adjustment request is detected within the target message adjustment interval, although the target message is not adjusted, the count value of the target counter in the target counter set needs to be updated.

Wherein, updating the count value of the target counter in the target counter set may include: detecting whether the counting state of the first target counter is a non-counting state; when the counting state of the first target counter is the non-counting state, using a set consisting of target counters whose count values are not the preset value as the fourth candidate counter set; the fourth candidate counter set comprises at least one target counter; determining, from the fourth candidate counter set, a target counter for which the counter identifications are the largest as a third maximum counter; for any target counter before the third largest counter, decrementing the count value of the next target counter of the target counter by 1 as the target count value; and updating the count value of the target counter to a target count value; updating the count value of the third maximum counterto a preset value. When the count state of the first target counter in the target counter set is not the non-counting state, use the set consisting of target counters whose count values are not the preset value as the fifth candidate counter set; the fifth candidate counter set includes at least one target counter; determine, from the fifth candidate counter set, a target counter with the largest counter identification as a fourth maximum counter; for any of the target counters preceding the fourth largest counter, decrement the count value of the target counter by one; at the same time, the count value of the fourth maximum counter is decremented by 1.

For example, if the message adjusted times is 2, the message adjustment limit times is 3, the preset value is 0, and the target counter set includes the first target counter, the second target counter and the third target counter; the counter identifications of the first target counter, the second target counter and the third target counter gradually become larger, the counter identification of the first target counter is the smallest, and the counter identification of the third target counter is the largest; the first count value of the first target counter is 1, the second count value of the second target counter is 8, and the third count value of the third target counter is 0. It can be seen that when a message adjustment request is not detected within the target message adjustment interval, the first count value will be decremented from 1 to 0, that is, the count state of the first target counter is the non-counting state; a set consisting of target counters whose count values are not the preset value is used as the fourth candidate counter set, that is, the fourth candidate counter set includes the first target counter and the second target counter; the target counter with the largest counter identification from the fourth candidate counter set is determined as the third maximum counter, that is, the third maximum counter is the second target counter; for the first target counter before the second target counter, the second count value of the second target counter is decremented by 1 as the target count value, that is, the target count value is 7; and update the first count value of the first target counter to the target count value, that is, the first count value is 7; at the same time, the second count value of the second target counter is updated to 0.

For example, if the message adjusted times is 2, the message adjustment limit times is 3, the preset value is 0, and the target counter set includes the first target counter, the second target counter and the third target counter; the counter identifications of the first target counter, the second target counter and the third target counter gradually become larger, the counter identification of the first target counter is the smallest, and the counter identification of the third target counter is the largest; the first count value of the first target counter is 2, the second count value of the second target counter is 5, and the third count value of the third target counter is 0. It can be seen that when a message adjustment request is not detected within the target message adjustment interval, a set consisting of target counters whose count values are not preset values is used as the fifth candidate counter set, that is, the fifth candidate counter set includes the first candidate counter and a second target counter; the target counter with the largest counter identification from the fifth candidate counter set is determined as the fourth maximum counter, that is, the fourth maximum counter is the second target counter; for the first target counter before the second target counter, the first count value of the first target counter is decremented by 1, that is, the first count value is updated to 1; at the same time, the second count value of the second target counter is decremented by 1, that is, the second count value is updated to 4.

### Embodiment 4

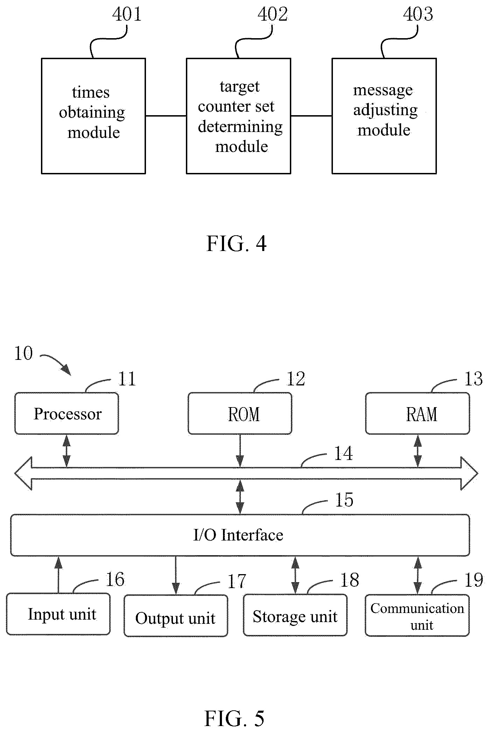

FIG. 4 is a schematic structural diagram of a message adjustment apparatus provided in Embodiment 4 of the present invention. This embodiment can be applied to the situation of adjusting messages during the BTM demodulation process, the apparatus can be implemented in the form of hardware and/or software, and can be configured in electronic device. As shown in FIG. 4, the apparatus includes:
A times obtaining module 401, for obtaining a message adjustment limit times and a message adjusted times of a target message adjustment interval;
A target counter set determining module 402, for determining a target counter set according to the message adjustment limit times; target counters of the target counter set are arranged in an orderly manner;
A message adjusting module 403 for performing message adjustment on the target message according to the message adjustment limit times, the message adjusted times, and a count value of the target counter in the target counter set when a message adjustment request is detected within the target message adjustment interval.

According to the technical solution of the embodiment of the present invention, by obtaining the message adjustment limit times and the message adjusted times of a target message adjustment interval, a target counter set can be determined according to the message adjustment limit times; target counters of the target counter set are arranged in an orderly manner; message adjustment can be performed on the target message according to the message adjustment limit times, the message adjusted times, and a count value of the target counter in the target counter set when a message adjustment request is detected within the target message adjustment interval. In the technical proposal, when the message adjustment request is detected within the target message adjustment interval, the target message is adjusted according to the change of the count value of the target counter in the target counter set, instead of directly adjusting the target message without judgment when the message adjustment request is detected in the target message adjustment interval, thereby limiting the adjustment times of the message in the BTM demodulation process to a certain extent, improving the message quality and reducing the message error, and enhancing the security of the message in the BTM demodulation process.

Optionally, the message adjusting module 403 includes:
A counting state detection unit for detecting whether a counting state of a first target counter in the target counter set is a non-counting state when the message adjusted times are less than the message adjustment limit times;
A count value detection unit for detecting whether count values of other target counters in the target counter set are all preset values when the counting state of the first target counter is a non-counting state; wherein the other target counters refer to target counters in the target counter set other than the first target counter;
A first message adjustment unit for updating the first count value to a target interval length of the target message adjustment interval, and performing message adjustment on the target message if yes;
A second message adjustment unit for, updating the count value of the target counter in the target counter set, and performing message adjustment on the target message if no.

Optionally, the second message adjustment unit includes:
A first candidate counter set determination subunit for taking a set consisting of target counters whose count values are not the preset value as a first candidate counter set; the first candidate counter set comprises at least one target counter;
A first maximum counter determination subunit for determining, from the first candidate counter set, a target counter with a largest counter identification as a first maximum counter;
A count value update subunit for updating the count value of the first maximum counter and the count value of the target counter before the first maximum counter.

Optionally, the count value update subunit is specifically used for:
For any one of target counters before the first maximum counter, taking a value obtained by decreasing a count value of a next target counter of the target counter by 1 as a target count value; and updating the count value of the target counter to the target count value;
Updating a count value of the first maximum counter to the target interval length.

Optionally, the apparatus also includes:
A second candidate counter set determination module for taking a set consisting of target counters whose count values are the preset value as a second candidate counter set when the message adjusted times are less than the message adjustment limit times, and the counting state of the first target counter is not a non-counting state; the second candidate counter set comprises at least one target counter;
A minimum counter determination module for determining, from the second candidate counter set, a target counter with a smallest counter identification as a minimum counter;
A count value update and message adjustment module for updating the count value of the minimum counter and the count value of the target counter before the minimum counter, and performing message adjustment on the target message.

Optionally, the apparatus also includes:
A counting state detection module for detecting whether a counting state of a first target counter is a non-counting state when the message adjusted times is equal to the message adjustment limit times;
A count value update module for updating the count value of the target counter in the target counter set, and performing adjustment on the target message if yes;
A message non-adjustment module for decrementing the count values of all target counters in the target counter set by 1, and the target message is not adjusted if no.

Optionally, the count value update module is specifically used for:
Taking a set consisting of target counters whose count values are not the preset value as a third candidate counter set; the third candidate counter set comprises at least one target counter;
Determining, from the third candidate counter set, a target counter with a largest counter identification as a second maximum counter;
For any one of target counters before the second maximum counter, taking a value obtained by decreasing a count value of a next target counter of the target counter by 1 as a target count value; and updating the count value of the target counter to the target count value;

Updating a count value of the second maximum counter to the target interval length.

The message adjustment apparatus provided by the embodiment of the present invention can execute the method for message adjustment provided by any embodiment of the present invention, and has corresponding functional modules and beneficial effects for executing each message adjustment method.

### Embodiment 5

FIG. 5 shows a schematic structural diagram of an electronic device 10 that can be used to implement embodiments of the present invention. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices (e.g., helmets, glasses, watches, etc.), and other similar computing devices. The components shown herein, their connections and relationships, and their functions are merely examples, and are not intended to limit the implementations of the invention described and/or claimed herein.

As shown in FIG. 5, the electronic device 10 comprises at least one processor 11, and a memory, such as a read-only memory (ROM) 12, a random access memory (RAM) 13, etc., communicatively connected to the at least one processor 11, wherein the memory stores a computer program executable by the at least one processor, The processor 11 may perform various appropriate actions and processes according to a computer program stored in a read-only memory (ROM) 12 or a computer program loaded from a storage unit 18 into a random access memory (RAM) 13. The RAM 13 may also store various programs and data necessary for the operation of the electronic device 10. The processor 11, the ROM 12, and the RAM 13 are connected to each other via a bus 14. An input/output (I/O) interface 15 is also connected to the bus 14.

A plurality of components in the electronic device 10 are connected to the I/O interface 15, including: an input unit 16 such as a keyboard, a mouse, or the like; An output unit 17 such as various types of displays, speakers, and the like; A storage unit 18, such as a magnetic disk, an optical disk, or the like; And a communication unit 19 such as a network card, a modem, a wireless communication transceiver, or the like. The communication unit 19 allows the electronic device 10 to exchange information/data with other devices through a computer network such as the Internet and/or various telecommunication networks.

The processor 11 may be a variety of general-purpose and/or special-purpose processing components having processing and computing capabilities. Some examples of processors 11 include, but are not limited to, a central processing unit (CPU), a graphics processing unit (GPU), various specialized artificial intelligence (AI) computing chips, various processors running machine learning model algorithms, digital signal processors (DSPs), and any suitable processors, controllers, microcontrollers, and the like. The processor 11 performs various methods and processes described above, such as a message adjustment method.

In some embodiments, the message adjustment method may be implemented as a computer program tangibly contained in a computer-readable storage medium, such as storage unit 18. In some embodiments, part or all of the computer program may be loaded and/or installed onto the electronic device 10 via the ROM 12 and/or the communication unit 19. When the computer program is loaded into the RAM 13 and executed by the processor 11, one or more steps of the message adjustment method described above may be performed. Alternatively, in other embodiments, processor 11 may be configured to perform the message adjustment method by any other suitable means (e.g., by means of firmware).

Various implementations of the systems and techniques described above herein may be implemented in digital electronic circuitry, integrated circuit systems, field programmable gate arrays (FPGAs), application specific integrated circuits (ASICs), application specific standard products (ASSPs), system-on-chip systems (SOCs), load programmable logic devices (CPLDs), computer hardware, firmware, software, and/or combinations thereof. These various embodiments may include being implemented in one or more computer programs executable and/or interpretable on a programmable system comprising at least one programmable processor, which may be a special-purpose or general-purpose programmable processor, and which may receive data and instructions from, and transmit the data and instructions to, a storage system, at least one input device, and at least one output device.

Computer programs for carrying out the methods of the present invention may be written in any combination of one or more programming languages. These computer programs may be provided to a processor of a general purpose computer, a special purpose computer, or other programmable data processing apparatus such that the computer program, when executed by the processor, causes the functions/operations specified in the flowchart and/or block diagram to be implemented. A computer program may be executed entirely on a machine, partially on a machine, partially on a machine and partially on a remote machine as a stand-alone software package, or entirely on a remote machine or server.

In the context of the present invention, a computer-readable storage medium may be a tangible medium that may contain or store a computer program for use by or in conjunction with an instruction execution system, apparatus, or apparatus. Computer-readable storage media may include, but are not limited to, electronic, magnetic, optical, electromagnetic, infrared, or semiconductor systems, devices, or devices, or any suitable combination of the foregoing. Alternatively, the computer-readable storage medium may be a machine-readable signal medium. More specific examples of machine-readable storage media may include one or more line-based electrical connections, portable computer disks, hard disks, random access memory (RAM), read-only memory (ROM), erasable programmable read-only memory (EPROM or flash memory), optical fibers, handy compact disk read-only memory (CD-ROM), optical storage devices, magnetic storage devices, or any suitable combination of the foregoing.

To provide interaction with a user, the systems and techniques described herein may be implemented on an electronic device having: a display device (e.g., a CRT (cathode ray tube) or an LCD (liquid crystal display) monitor) for displaying information to the user; And a keyboard and a pointing device (e.g., a mouse or trackball) through which the user can provide input to the electronic device. Other kinds of devices may also be used to provide interaction with a user; For example, the feedback provided to the user may be any form of sensory feedback (e.g., visual feedback, auditory feedback, or tactile feedback); And input from the user may be received in any form, including acoustic input, voice input, or tactile input.

The systems and techniques described herein may be implemented in a computing system that includes back-end components (e.g., as a data server), or a computing system that includes middleware components (e.g., application servers), or a computing system that includes front-end components (e.g., A user computer having a graphical user interface or web browser through which the user can interact with implementations of the systems and techniques described herein), or any combination of such back-end components, middleware components, or front-end components. The components of the system may be interconnected by any form or medium of digital data communication (e.g., a communication network). Examples of communication networks include: local area networks (LAN), wide area networks (WAN), blockchain networks, and the Internet.

The computing system may include a client and a server. Clients and servers are generally remote from each other and typically interact through a communication network. The relationship between the client and the server is generated by computer programs running on respective computers and having a client-server relationship with each other. The server can be a cloud server, also known as cloud computing server or cloud host. It is a host product in the cloud computing service system, which solves the problems of difficult management and weak business scalability in traditional physical hosts and VPS services. defects.

It should be understood that steps may be reordered, added, or deleted using the various forms of flow shown above. For example, the steps described in the present invention may be executed in parallel, sequentially, or in different orders, and are not limited herein as long as the desired results of the aspect of the present invention can be achieved.

The above-described specific embodiments do not limit the scope of protection of the present invention. It will be understood by those skilled in the art that various modifications, combinations, sub-combinations, and substitutions may be made within the scope of the appended claims.

## Claims

1. A method for message adjustment for balise transmission module, BTM, demodulation process, **characterized by**, comprising:
obtaining a message adjustment limit times and a message adjusted times of a target message adjustment interval, wherein the message adjustment limit times is upper limit of times of message adjustment allowed within the target message adjustment interval, the message adjusted times is total number of times target message has been adjusted within the target message adjustment interval, wherein the message adjusted times in the target message adjustment interval is 0 in initial case, the target message adjustment interval is interval in which the target message is adjusted in bits, the target message is a message to be adjusted;
determining a target counter set according to the message adjustment limit times; target counters of the target counter set are arranged in an orderly manner, wherein the target counter set is a set aggregated by at least one target counter, the target counter is a counter used for message adjustment during the BTM demodulation process, wherein the target counters are arranged in order in the target counter set according to generation order of the target counters according to counter identification from small to large;
performing message adjustment on the target message according to the message adjustment limit times, the message adjusted times, and a count value of each target counter in the target counter set when a message adjustment request is detected within the target message adjustment interval.

2. The method according to claim 1, comprising, performing message adjustment on the target message according to the message adjustment limit times, the message adjusted times, and a count value of the target counter in the target counter set, comprises:
detecting whether a counting state of a first target counter in the target counter in the target counter set is a non-counting state when the message adjusted times are less than the message adjustment limit times, the non-counting state is a state in which the first count value is to be reduced from 1 to 0 at a current time;
detecting whether count values of other target counters in the target counter set are all preset values when the counting state of the first target counter is a non-counting state; wherein the other target counters refer to target counters in the target counter set other than the first target counter;
if yes, updating the first count value to a target interval length of the target message adjustment interval, and performing message adjustment on the target message, wherein the target interval length is an interval length of the target message adjustment interval determined by encoding characteristics of the message;
If no, updating the count value of the target counter in the target counter set, and performing message adjustment on the target message.

3. The method according to claim 2, comprising, updating the count values of the target counter in the target counter set comprises:
taking a set consisting of target counters whose count values are not the preset value as a first candidate counter set; the first candidate counter set comprises at least one target counter;
determining, from the first candidate counter set, a target counter with a largest counter identification as a first maximum counter;
updating the count value of the first maximum counter and the count value of the target counter before the first maximum counter, wherein the target counter before the first maximum counter is the target counter whose counter identification is smaller than the first maximum counter.

4. The method according to claim 3, comprising, updating the count value of the first maximum counter and the count value of the target counter before the first maximum counter comprises:
for any one of target counters before the first maximum counter, taking a value obtained by decreasing a count value of a next target counter of the target counter by 1 as a target count value; and updating the count value of the target counter to the target count value;
updating a count value of the first maximum counter to the target interval length.

5. The method according to claim 2, comprising, the method further comprising:
taking a set consisting of target counters whose count values are the preset value as a second candidate counter set when the message adjusted times are less than the message adjustment limit times, and the counting state of the first target counter is not a non-counting state; the second candidate counter set comprises at least one target counter;
determining, from the second candidate counter set, a target counter with a smallest counter identification as a minimum counter;
updating the count value of the minimum counter and the count value of the target counter before the minimum counter, and performing message adjustment on the target message, wherein the target counter before the minimum counter is the target counter whose counter identification is smaller than the minimum counter.

6. The method according to claim 2, comprising, the method further comprising:
detecting whether a counting state of a first target counter is a non-counting state when the message adjusted times is equal to the message adjustment limit times;
if yes, updating the count value of the target counter in the target counter set, and performing adjustment on the target message;
if no, decrementing the count values of all target counters in the target counter set by 1, and the target message is not adjusted.

7. The method according to claim 6, comprising, updating the count value of the target counter in the target counter set comprises:
taking a set consisting of target counters whose count values are not the preset value as a third candidate counter set; the third candidate counter set comprises at least one target counter;
determining, from the third candidate counter set, a target counter with a largest counter identification as a second maximum counter;
for any one of target counters before the second maximum counter, taking a value obtained by decreasing a count value of a next target counter of the target counter by 1 as a target count value; and updating the count value of the target counter to the target count value;
updating a count value of the second maximum counter to the target interval length, wherein the target counter before the second maximum counter is the target counter whose counter identification is smaller than the second maximum counter.

8. A message adjustment apparatus for balise transmission module, BTM, demodulation process, **characterized by**, comprising:
a times obtaining module for obtaining a message adjustment limit times and a message adjusted times of a target message adjustment interval, wherein the message adjustment limit times is upper limit of times of message adjustment allowed within the target message adjustment interval, the message adjusted times is total number of times target message has been adjusted within the target message adjustment interval, wherein the message adjusted times in the target message adjustment interval is 0 in initial case, the target message adjustment interval is interval in which the target message is adjusted in bits, the target message is a message to be adjusted;
a target counter set determining module for determining a target counter set according to the message adjustment limit times; target counters of the target counter set are arranged in an orderly manner, wherein the target counter set is a set aggregated by at least one target counter, the target counter is a counter used for message adjustment during the BTM demodulation process, wherein the target counters are arranged in order in the target counter set according to generation order of the target counters according to counter identification from small to large;
a message adjusting module for performing message adjustment on the target message according to the message adjustment limit times, the message adjusted times, and a count value of each target counter in the target counter set when a message adjustment request is detected within the target message adjustment interval.

9. An electronic device, **characterized in that**, the electronic device comprising:
at least one processor; and
a memory communicatively connected to the at least one processor; wherein,
the memory stores a computer program executable by the at least one processor, the computer program being executed by the at least one processor to enable the at least one processor to perform the message adjustment method of any one of claims 1-7.

10. A computer-readable storage medium, **characterized in that** the computer-readable storage medium stores computer instructions for implementing the message adjustment method according to any one of claims 1-7 when executed by a processor.

## Patentansprüche

1. Verfahren zur Nachrichtenanpassung für einen Balisenübertragungsmodul-, BTM-, Demodulationsprozess, **dadurch gekennzeichnet, dass** es umfasst:
Erhalten einer Nachrichtenanpassungsgrenzanzahl und einer Nachrichtenanpassungsanzahl eines Zielnachrichtenanpassungsintervalls, wobei die Nachrichtenanpassungsgrenzanzahl eine Obergrenze der Anzahl von innerhalb des Zielnachrichtenanpassungsintervalls erlaubter Nachrichtenanpassung ist, die Nachrichtenanpassungsanzahl eine Gesamtanzahl ist, wie oft die Zielnachricht innerhalb des Zielnachrichtenanpassungsintervalls angepasst worden ist, wobei die Nachrichtenanpassungsanzahl in dem Zielnachrichtenanpassungsintervall im Anfangsfall 0 ist, das Zielnachrichtenanpassungsintervall ein Intervall ist, in dem die Zielnachricht in Bits angepasst wird, die Zielnachricht eine anzupassende Nachricht ist;
Bestimmen eines Zielzählersatzes gemäß der Nachrichtenanpassungsgrenzanzahl; Zielzähler des Zielzählersatzes sind auf geordnete Weise angeordnet, wobei der Zielzählersatz ein aus mindestens einem Zielzähler aggregierter Satz ist, der Zielzähler ein für die Nachrichtenanpassung während des BTM-Demodulationsprozesses verwendeter Zähler ist, wobei die Zielzähler in dem Zielzählersatz in Reihenfolge gemäß der Erzeugungsreihenfolge der Zielzähler gemäß der Zählerkennung von klein nach groß angeordnet sind;
Durchführen von Nachrichtenanpassung an der Zielnachricht gemäß der Nachrichtenanpassungsgrenzanzahl, der Nachrichtenanpassungsanzahl und einem Zählwert jedes Zielzählers in dem Zielzählersatz, wenn eine Nachrichtenanpassungsanforderung innerhalb des Zielnachrichtenanpassungsintervalls detektiert wird.

2. Verfahren nach Anspruch 1, wobei Durchführen von Nachrichtenanpassung an der Zielnachricht gemäß der Nachrichtenanpassungsgrenzanzahl, der Nachrichtenanpassungsanzahl und einem Zählwert des Zielzählers in dem Zielzählersatz umfasst:
Detektieren, ob ein Zählzustand eines ersten Zielzählers in dem Zielzähler in dem Zielzählersatz ein Nichtzählzustand ist, wenn die Nachrichtenanpassungsanzahl kleiner als die Nachrichtenanpassungsgrenzanzahl ist, wobei der Nichtzählzustand ein Zustand ist, in dem der erste Zählwert zu einem aktuellen Zeitpunkt von 1 auf 0 reduziert werden soll;
Detektieren, ob Zählwerte anderer Zielzähler in dem Zielzählersatz alle Vorgabewerte sind, wenn der Zählzustand des ersten Zielzählers ein Nichtzählzustand ist; wobei die anderen Zielzähler sich auf Zielzähler in dem Zielzählersatz außer dem ersten Zielzähler beziehen;
falls ja, Aktualisieren des ersten Zählwerts auf eine Zielintervalllänge des Zielnachrichtenanpassungsintervalls und Durchführen von Nachrichtenanpassung an der Zielnachricht, wobei die Zielintervalllänge eine durch Codierungsmerkmale der Nachricht bestimmte Intervalllänge des Zielnachrichtenanpassungsintervalls ist;
falls nein, Aktualisieren des Zählwerts des Zielzählers in dem Zielzählersatz und Durchführen von Nachrichtenanpassung an der Zielnachricht.

3. Verfahren nach Anspruch 2, wobei Aktualisieren der Zählwerte des Zielzählers in dem Zielzählersatz umfasst:
Nehmen eines aus Zielzählern, deren Zählwerte nicht der Vorgabewert sind, bestehenden Satzes als einen ersten Kandidatenzählersatz; der erste Kandidatenzählersatz umfasst mindestens einen Zielzähler;
Bestimmen, aus dem ersten Kandidatenzählersatz, eines Zielzählers mit einer größten Zählerkennung als einen ersten Maximalzähler;
Aktualisieren des Zählwerts des ersten Maximalzählers und des Zählwerts des Zielzählers vor dem ersten Maximalzähler, wobei der Zielzähler vor dem ersten Maximalzähler der Zielzähler ist, dessen Zählerkennung kleiner als der erste Maximalzähler ist.

4. Verfahren nach Anspruch 3, wobei Aktualisieren des Zählwerts des ersten Maximalzählers und des Zählwerts des Zielzählers vor dem ersten Maximalzähler umfasst:
für einen beliebigen der Zielzähler vor dem ersten Maximalzähler, Nehmen eines Werts, der durch Verringern eines Zählwerts eines nächsten Zielzählers des Zielzählers um 1 erhalten wird, als einen Zielzählwert; und Aktualisieren des Zählwerts des Zielzählers auf den Zielzählwert;
Aktualisieren eines Zählwerts des ersten Maximalzählers auf die Zielintervalllänge.

5. Verfahren nach Anspruch 2, wobei das Verfahren ferner umfasst:
Nehmen eines aus Zielzählern, deren Zählwerte der Vorgabewert sind, bestehenden Satzes als einen zweiten Kandidatenzählersatz, wenn die Nachrichtenanpassungsanzahl kleiner als die Nachrichtenanpassungsgrenzanzahl ist und der Zählzustand des ersten Zielzählers kein Nichtzählzustand ist; der zweite Kandidatenzählersatz umfasst mindestens einen Zielzähler;
Bestimmen, aus dem zweiten Kandidatenzählersatz, eines Zielzählers mit einer kleinsten Zählerkennung als einen Minimalzähler;
Aktualisieren des Zählwerts des Minimalzählers und des Zählwerts des Zielzählers vor dem Minimalzähler und Durchführen von Nachrichtenanpassung an der Zielnachricht, wobei der Zielzähler vor dem Minimalzähler der Zielzähler ist, dessen Zählerkennung kleiner als der Minimalzähler ist.

6. Verfahren nach Anspruch 2, wobei das Verfahren ferner umfasst:
Detektieren, ob ein Zählzustand eines ersten Zielzählers ein Nichtzählzustand ist, wenn die Nachrichtenanpassungsanzahl gleich der Nachrichtenanpassungsgrenzanzahl ist;
falls ja, Aktualisieren des Zählwerts des Zielzählers in dem Zielzählersatz und Durchführen von Anpassung an der Zielnachricht;
falls nein, Dekrementieren der Zählwerte aller Zielzähler in dem Zielzählersatz um 1, und die Zielnachricht wird nicht angepasst.

7. Verfahren nach Anspruch 6, wobei Aktualisieren des Zählwerts des Zielzählers in dem Zielzählersatz umfasst:
Nehmen eines aus Zielzählern, deren Zählwerte nicht der Vorgabewert sind, bestehenden Satzes als einen dritten Kandidatenzählersatz; der dritte Kandidatenzählersatz umfasst mindestens einen Zielzähler;
Bestimmen, aus dem dritten Kandidatenzählersatz, eines Zielzählers mit einer größten Zählerkennung als einen zweiten Maximalzähler;
für einen beliebigen der Zielzähler vor dem zweiten Maximalzähler, Nehmen eines Werts, der durch Verringern eines Zählwerts eines nächsten Zielzählers des Zielzählers um 1 erhalten wird, als einen Zielzählwert; und Aktualisieren des Zählwerts des Zielzählers auf den Zielzählwert;
Aktualisieren eines Zählwerts des zweiten Maximalzählers auf die Zielintervalllänge, wobei der Zielzähler vor dem zweiten Maximalzähler der Zielzähler ist, dessen Zählerkennung kleiner als der zweite Maximalzähler ist.

8. Nachrichtenanpassungseinrichtung für einen Balisenübertragungsmodul-, BTM-, Demodulationsprozess, **dadurch gekennzeichnet, dass** sie
umfasst:
ein Anzahlerfassungsmodul zum Erhalten einer Nachrichtenanpassungsgrenzanzahl und einer Nachrichtenanpassungsanzahl eines Zielnachrichtenanpassungsintervalls, wobei die Nachrichtenanpassungsgrenzanzahl eine Obergrenze der Anzahl von innerhalb des Zielnachrichtenanpassungsintervalls erlaubter Nachrichtenanpassung ist, die Nachrichtenanpassungsanzahl eine Gesamtanzahl ist, wie oft die Zielnachricht innerhalb des Zielnachrichtenanpassungsintervalls angepasst worden ist, wobei die Nachrichtenanpassungsanzahl in dem Zielnachrichtenanpassungsintervall im Anfangsfall 0 ist, das Zielnachrichtenanpassungsintervall ein Intervall ist, in dem die Zielnachricht in Bits angepasst wird, die Zielnachricht eine anzupassende Nachricht ist;
ein Zielzählersatzbestimmungsmodul zum Bestimmen eines Zielzählersatzes gemäß der Nachrichtenanpassungsgrenzanzahl; Zielzähler des Zielzählersatzes sind auf geordnete Weise angeordnet, wobei der Zielzählersatz ein aus mindestens einem Zielzähler aggregierter Satz ist, der Zielzähler ein für die Nachrichtenanpassung während des BTM-Demodulationsprozesses verwendeter Zähler ist, wobei die Zielzähler in dem Zielzählersatz in Reihenfolge gemäß der Erzeugungsreihenfolge der Zielzähler gemäß der Zählerkennung von klein nach groß angeordnet sind;
ein Nachrichtenanpassungsmodul zum Durchführen von Nachrichtenanpassung an der Zielnachricht gemäß der Nachrichtenanpassungsgrenzanzahl, der Nachrichtenanpassungsanzahl und einem Zählwert jedes Zielzählers in dem Zielzählersatz, wenn eine Nachrichtenanpassungsanforderung innerhalb des Zielnachrichtenanpassungsintervalls detektiert wird.

9. Elektronische Vorrichtung, **dadurch gekennzeichnet, dass** die elektronische Vorrichtung umfasst:
mindestens einen Prozessor; und
einen Speicher, der mit dem mindestens einen Prozessor kommunikativ verbunden ist; wobei,
der Speicher ein Computerprogramm speichert, das von dem mindestens einen Prozessor ausführbar ist, wobei das Computerprogramm von dem mindestens einen Prozessor ausgeführt wird, um es dem mindestens einen Prozessor zu ermöglichen, das Nachrichtenanpassungsverfahren nach einem der Ansprüche 1-7 durchzuführen.

10. Computerlesbares Speichermedium, **dadurch gekennzeichnet, dass** das computerlesbare Speichermedium Computerbefehle zum Implementieren des Nachrichtenanpassungsverfahrens nach einem der Ansprüche 1-7 speichert, wenn diese von einem Prozessor ausgeführt werden.

## Revendications

1. Procédé d'ajustement de message pour le processus de démodulation d'un module de transmission de balise BTM, **caractérisé en ce qu'**il, comprend :
l'obtention du nombre d'ajustements de message et d'un nombre d'ajustements de message effectués pour un intervalle d'ajustement de message cible, dans lequel la limite du nombre d'ajustements de message étant la limite supérieure du nombre d'ajustements de message autorisés au cours de l'intervalle d'ajustement de message cible, le nombre d'ajustements de message effectués étant le nombre total d'ajustements du message cible effectués au cours de l'intervalle d'ajustement de message cible, dans lequel le nombre d'ajustements de message effectués au cours de l'intervalle d'ajustement de message cible étant égal à 0 dans un état initial, l'intervalle d'ajustement de message cible étant un intervalle au cours duquel le message cible est ajusté en bits, le message cible étant un message devant être ajusté ;
la détermination d'un ensemble de compteurs cibles en fonction de la limite du nombre d'ajustements de message ; les compteurs cibles de l'ensemble de compteurs cibles étant agencés dans un ordre déterminé, dans lequel l'ensemble de compteurs cibles étant un ensemble regroupant au moins un compteur cible, le compteur cible étant un compteur utilisé pour l'ajustement de message au cours du processus de démodulation BTM, dans lequel les compteurs cibles étant agencés dans l'ensemble de compteurs cibles en fonction de l'ordre de génération des compteurs cibles, en fonction de l'identification des compteurs, de la plus petite à la plus grande ;
la réalisation d'un ajustement de message sur le message cible en fonction de la limite du nombre d'ajustements de message, du nombre d'ajustements de message effectués et d'une valeur de comptage de chaque compteur cible de l'ensemble de compteurs cibles lorsqu'une demande d'ajustement de message est détectée au cours de l'intervalle d'ajustement de message cible.

2. Procédé selon la revendication 1, comprenant la réalisation de l'ajustement de message sur le message cible en fonction de la limite du nombre d'ajustements de message, du nombre d'ajustements de message effectués et d'une valeur de comptage du compteur cible dans l'ensemble de compteurs cibles, comprend :
le fait de détecter si un état de comptage d'un premier compteur cible parmi les compteurs cibles de l'ensemble de compteurs cibles est un état sans comptage lorsque le nombre d'ajustements de message effectués est inférieur à la limite du nombre d'ajustements de message, l'état sans comptage étant un état dans lequel la première valeur de comptage doit être réduite de 1 à 0 à un instant courant ;
le fait de détecter si les valeurs de comptage des autres compteurs cibles de l'ensemble de compteurs cibles sont toutes des valeurs prédéfinies lorsque l'état de comptage du premier compteur cible est un état sans comptage ; dans lequel les autres compteurs cibles désignent les compteurs cibles de l'ensemble de compteurs cibles autres que le premier compteur cible ;
si oui, la mise à jour de la première valeur de comptage à une longueur d'intervalle cible de l'intervalle d'ajustement de message cible, et la réalisation d'un ajustement de message sur le message cible, dans lequel la longueur d'intervalle cible étant une longueur d'intervalle de l'intervalle d'ajustement de message cible déterminée par les caractéristiques de codage du message ;
si non, la mise à jour de la valeur de comptage du compteur cible dans l'ensemble de compteurs cibles, et la réalisation d'un ajustement de message sur le message cible.

3. Procédé selon la revendication 2, comprenant la mise à jour des valeurs de comptage du compteur cible dans l'ensemble de compteurs cibles comprend :
le fait de prendre un ensemble constitué de compteurs cibles dont les valeurs de comptage ne sont pas la valeur prédéfinie comme un premier ensemble de compteurs candidats ; le premier ensemble de compteurs candidats comprend au moins un compteur cible ;
la détermination, à partir du premier ensemble de compteurs candidats, d'un compteur cible ayant l'identification de compteur la plus grande comme étant un premier compteur maximal ;
la mise à jour de la valeur de comptage du premier compteur maximal et de la valeur de comptage du compteur cible précédant le premier compteur maximal, dans lequel le compteur cible précédant le premier compteur maximal étant le compteur cible dont l'identification de compteur est inférieure à celle du premier compteur maximal.

4. Procédé selon la revendication 3, comprenant la mise à jour de la valeur de comptage du premier compteur maximal et de la valeur de comptage du compteur cible précédant le premier compteur maximal :
pour chacun des compteurs cibles précédant le premier compteur maximal, le fait de prendre comme valeur de comptage cible une valeur obtenue en diminuant de 1 la valeur de comptage d'un compteur cible suivant ledit compteur cible ; et la mise à jour de la valeur de comptage du compteur cible avec la valeur de comptage cible ;
la mise à jour de la valeur de comptage du premier compteur maximum à la longueur de l'intervalle cible.

5. Procédé selon la revendication 2, comprenant, le procédé comprenant en outre :
le fait de prendre, lorsque le nombre d'ajustements de message effectués est inférieur à la limite du nombre d'ajustements de message et que l'état de comptage du premier compteur cible n'est pas un état sans comptage, un ensemble constitué de compteurs cibles dont les valeurs de comptage sont la valeur prédéfinie comme un second ensemble de compteurs candidats ; le second ensemble de compteurs candidats comprend au moins un compteur cible ;
la détermination, à partir du second ensemble de compteurs candidats, d'un compteur cible avec une identification de compteur la plus petite comme étant un compteur minimal ;
la mise à jour de la valeur de comptage du compteur minimal et de la valeur de comptage du compteur cible précédant le compteur minimal, et la réalisation d'un ajustement de message sur le message cible, dans lequel le compteur cible précédant le compteur minimal étant le compteur cible dont l'identification de compteur est inférieure à celle du compteur minimal.

6. Procédé selon la revendication 2, comprenant, le procédé comprenant en outre :
le fait de détecter si un état de comptage d'un premier compteur cible est un état sans comptage lorsque le nombre de fois ajusté du message est égal au nombre maximal d'ajustements de message ;
si oui, la mise à jour de la valeur de comptage du compteur cible dans l'ensemble de compteurs cibles, et la réalisation d'un ajustement sur le message cible ;
si non, la diminution de 1 les valeurs de comptage de tous les compteurs cibles de l'ensemble de compteurs cibles, et ne pas ajuster le message cible.

7. Procédé selon la revendication 6, comprenant la mise à jour de la valeur de comptage du compteur cible dans l'ensemble de compteurs cibles comprend :
le fait de prendre un ensemble constitué de compteurs cibles dont les valeurs de comptage ne correspondent pas à la valeur prédéfinie, en tant que troisième ensemble de compteurs candidats ; le troisième ensemble de compteurs candidats comprend au moins un compteur cible ;
la détermination, à partir du troisième ensemble de compteurs candidats, d'un compteur cible ayant l'identification de compteur la plus grande comme étant un second compteur maximal ;
pour l'un quelconque des compteurs cibles situés avant le second compteur maximal, le fait de prendre comme valeur de comptage cible une valeur obtenue en diminuant de 1 la valeur de comptage d'un compteur cible suivant du compteur cible ; et la mise à jour de la valeur de comptage du compteur cible à la valeur de comptage cible ;
la mise à jour de la valeur de comptage du second compteur maximal à la longueur de l'intervalle cible, dans lequel le compteur cible situé avant le second compteur maximal est le compteur cible dont l'identification de compteur est inférieure à celle du second compteur maximal.

8. Appareil d'ajustement de message pour le processus de démodulation d'un module de transmission de balise, BTM, **caractérisé en ce qu'**il,
comprend :
un module d'obtention du nombre d'ajustements de message et d'un nombre d'ajustements de message effectués pour un intervalle d'ajustement de message cible, dans lequel la limite du nombre d'ajustements de message étant la limite supérieure du nombre d'ajustements de message autorisés au cours de l'intervalle d'ajustement de message cible, le nombre d'ajustements de message effectués étant le nombre total d'ajustements du message cible effectués au cours de l'intervalle d'ajustement de message cible, dans lequel le nombre d'ajustements de message effectués au cours de l'intervalle d'ajustement de message cible étant égal à 0 dans un état initial, l'intervalle d'ajustement de message cible étant un intervalle au cours duquel le message cible est ajusté en bits, le message cible étant un message devant être ajusté ;
un module de détermination d'un ensemble de compteurs cibles, destiné à déterminer un ensemble de compteurs cibles en fonction du nombre maximal d'ajustements de message ; les compteurs cibles de l'ensemble de compteurs cibles étant agencés dans un ordre déterminé, dans lequel l'ensemble de compteurs cibles est un ensemble constitué d'au moins un compteur cible, le compteur cible étant un compteur utilisé pour l'ajustement du message au cours du processus de démodulation du BTM, dans lequel les compteurs cibles sont agencés dans l'ordre au sein de l'ensemble de compteurs cibles selon l'ordre de génération des compteurs cibles, en fonction de leurs identifiants de compteur classés du plus petit au plus grand ;
un module d'ajustement de message destiné à effectuer un ajustement du message cible en fonction de la limite du nombre de fois d'ajustement de message, du nombre de fois d'ajustement de message et d'une valeur de comptage de chaque compteur cible de l'ensemble de compteurs cibles lorsqu'une demande d'ajustement de message est détectée au sein de l'intervalle d'ajustement de message cible.

9. Dispositif électronique, **caractérisé en ce que**, le dispositif électronique comprenant :
au moins un processeur ; et
une mémoire connectée en communication avec l'au moins un processeur ; dans lequel,
la mémoire stocke un programme informatique exécutable par l'au moins un processeur, le programme informatique étant exécuté par l'au moins un processeur pour amener l'au moins un processeur à réaliser le procédé d'ajustement de message selon l'une quelconque des revendications 1 à 7.

10. Support de stockage lisible par ordinateur, **caractérisé en ce que** le support de stockage lisible par ordinateur stocke des instructions informatiques pour la mise en œuvre du procédé d'ajustement de message selon l'une quelconque des revendications 1 à 7 lorsqu'il est exécuté par un processeur.
